**Europäisches Patentamt**

(19) **European Patent Office**

**Office européen des brevets**

(11) Veröffentlichungsnummer: **0 007 417**
**B2**

# (12) NEUE EUROPÄISCHE PATENTSCHRIFT

(45) Veröffentlichungstag der neuen Patentschrift:
14.08.85

(21) Anmeldenummer: 79101914.4

(22) Anmeldetag: 12.06.79

(51) Int. Cl.⁴: **G 06 F 3/02**

(54) **Tasteneingabevorrichtung für elektronische Rechner, insbesondere Mikrocomputer, zum Eingeben von Kommandos und/oder Kommandofolgen.**

(30) Priorität: 10.07.78 DE 2830283

(43) Veröffentlichungstag der Anmeldung:
06.02.80 Patentblatt 80/3

(45) Bekanntmachung des Hinweises auf die Patenterteilung:
04.08.82 Patentblatt 82/31

(45) Bekanntmachung des Hinweises auf die Entscheidung über den Einspruch:
14.08.85 Patentblatt 85/33

(84) Benannte Vertragsstaaten:
FR GB IT NL

(56) Entgegenhaltungen:
DE - A - 2 605 565
DE - A - 2 636 189
DE - A - 2 647 896
DE - A - 2 652 407
DE - A - 2 737 697
DE - A - 2 832 673
US - A - 4 027 290

"An Introduction to Microcomputer" published by Adam Osborne and Associates, Berkeley, California 1975 (pages 5-22 and 5-23)
B. Soucek "Microprocessors and Microcomputers" published by John Wiley and Sons, New York, 1976 (pages 174-177)
"An Introduction to Microcomputers" Volume I, Basic

(73) Patentinhaber: **Siemens Aktiengesellschaft, Berlin und München Wittelsbacherplatz 2, D-8000 München 2 (DE)**

(72) Erfinder: **Schwärtzel, Heinz, Dipl.-Math, Staudinger Strasse 55, D-8000 München 83 (DE)**
Erfinder: **Geitz, Gerhard, Dipl.-Math, Marschner Strasse 41g, D-8000 München 60 (DE)**
Erfinder: **Hörbst, Egon, Dr., Tellhöhe 8, D-8031 Stockdorf (DE)**
Erfinder: **Sauer, Anton, Dipl.-Ing., Tristanstrasse 14, D-8034 Germering (DE)**

(56) Entgegenhaltungen: (Fortsetzung)
**Concepts published by Adam Osborne and Associates, Berkeley, California 1976 (pages 7-47 - 7-52)**

## Beschreibung

Die Erfindung betrifft eine Tasteneingabevorrichtung für elektronische Rechner, insbesondere Mikrocomputer, zum Eingeben von Kommandos und/oder Kommandofolgen nach dem Oberbegriff des einzigen Anspruchs.

Der Dialog zwischen Rechner und Benutzer wird in bekannten datenverarbeitenden Anlagen so abgewickelt, dass über die Tastatur einer Bedienkonsole (Fernschreiber, Datensichtgerät o.ä.) Kommandos bzw. Kommandofolgen Zeichen für Zeichen eingegeben werden.

Insbesondere bei komplexen Aufgaben ist der Benutzer verhältnismässig stark durch mit dem Dialog, weniger durch mit dem eigentlichen Problem zusammenhängende Vorgänge belastet. Dieser Sachverhalt ergibt sich im wesentlichen daraus, dass bestimmte grammatikalische und syntaktische Regeln für den Dialog einzuhalten sind. Will der Benutzer editieren, assemblieren, mit dem Betriebssystem oder einem Compiler arbeiten, so müssen ausserdem dafür erforderliche Programme geladen und Resultate gesichert werden.

Da komplexere Aufgaben bisher an grösseren Rechnern bearbeitet wurden, für die speziell ausgebildetes Bedienpersonal vorgesehen ist, traten die genannten Probleme für den Anwender nicht so sehr in Erscheinung. Je mehr aber durch den Einsatz von Mikrocomputern Intelligenz vom Rechenzentrum weg an den Arbeitsplatz verlagert wird, desto häufiger werden dort komplexe Aufgaben gelöst. Der Benutzer benötigt dann die Ausbildung eines Operators.

Aus der DE-A 2 652 407 ist eine Tasteneingabevorrichtung für eine Datenverarbeitungsanlage bekannt, welche Vorrichtung zum Eingeben von Zeichen, Symbolen und Befehlen dient. Ein Tastendruck kann dabei zur Eingabe einzelner Befehle oder einer Befehlsfolge führen, wobei den einzelnen Tasten ein oder mehrere Zeichen, Symbole oder Befehle zugeordnet sind. Bei der Betätigung einer Taste wird ein der Schaltstellung der Taste zugeordnetes Signal abgegeben. Durch eine zyklische Abfrage dieser Signale wird die Betätigung erfasst und ein entsprechender Bereich eines Codierspeichers aufgerufen. Dieser Bereich enthält entweder eine Zeicheninformation, die für die Datenverarbeitungsanlage direkt verwendbar ist, oder eine Adresse für einen Sequenzspeicher, von dem mehrere sequentiell gespeicherte und als Befehle zu interpretierende Informationen an die Datenverarbeitungsanlage ausgelesen werden.

Aus der US-A 4 027 290 ist darüber hinaus eine vergleichbare Vorrichtung für elektronische Rechner bekannt, die die im Oberbegriff des Patentanspruches angegebene merkmalskombination aufweist.

Der Erfindung liegt die Aufgabe zugrunde, die zusätzliche Arbeit, die der Benutzer leisten muss, wesentlich zu vereinfachen. Dies soll aufgabengemäss durch eine Tasteneingabevorrichtung geschehen, die jeweils auf vorhandene Rechner anwendbar ist.

Der Erfindung liegt der Gedanke zugrunde, dass eine funktionsgebundene Tastatur, die der Bedienkonsole zugeordnet ist, und deren Decodierung im Rechner bestimmte Softwareroutinen aufruft, die Hantierung eines jeweils gewünschten Programms automatisieren und für den Benutzer vereinfachen kann.

Die genannte Aufgabe wird durch eine wie eingangs erwähnte Tasteneingabevorrichtung für elektronische Rechner, insbesondere Mikrocomputer, gelöst, die durch die im kennzeichnenden Teil des Patentanspruchs angegebenen Merkmal gekennzeichnet ist.

Die Erfindung bietet den Vorteil, dass ein Dialog auch für komplexe Aufgaben direkt von der mit der zu lösenden Aufgabe vertrauten Person ohne Belastung durch maschinenbedingte, komplexe Bedienungsvorgänge ermöglicht ist.

Die Erfindung wird im folgenden anhand zweier ein Ausführungsbeispiel für die Erfindung betreffender Figuren erläutert.

Figur 1 zeigt die prinzipielle Anschaltungsmöglichkeit einer funktionsgebundenen Tastatur an einen Mikrocomputer.

Figur 2 zeigt den prinzipiellen Programmablauf, der sich nach dem Betätigen einer Taste einstellt.

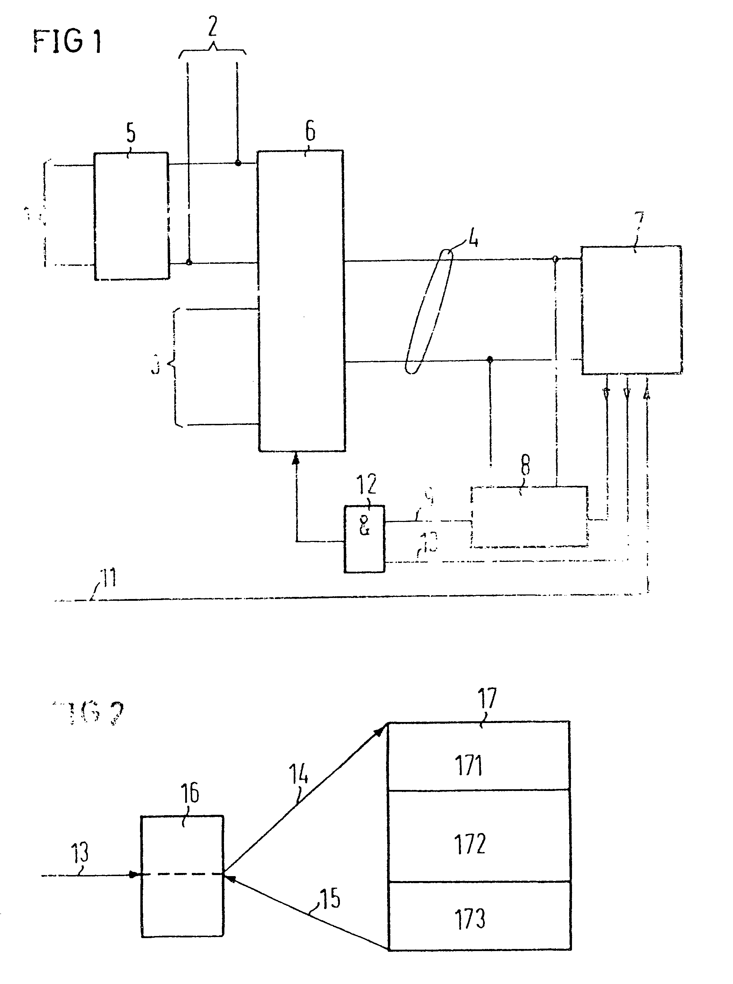

Wie bereits angegeben, zeigt Figur 1 die prinzipielle Anschaltungsmöglichkeit einer funktionsgebundenen Tastatur an einen Mikrocomputer. Dazu ist bei dem angegebenen Ausführungsbeispiel zwischen die in der Figur 1 nicht gezeigte Tastatur und dem System-Datenbus 2 ein Eingabe-Port 5 geschaltet. Zwischen den Prozessor-Datenbus 4 und den System-Datenbus 2 ist ein Multiplexer 6 eingefügt. An den Prozessor-Datenbus 4 ist ausserdem ein Zustands-Decoder 8 angeschlossen. Dieser Zustands-Decoder 8 ist mit einer Signalleitung an den Prozessor 7 und mit einer Interrupt-Quittungsleitung 9 an einen Eingang eines UND-Gliedes 12 angeschlossen. Der Prozessor 7 ist ausserdem mit einem weiteren Eingang des UND-Gliedes 12 über eine Datenbus-Eingabesignalleitung 10 verbunden. Der Ausgang des UND-Gliedes 12 ist mit dem Multiplexer 6 verbunden.

Beim Betätigen einer Taste der funktionsgebundenen Tastatur wird eine entsprechende Meldung über einen Interrupt-Eingang 11 des Prozessors 7 von einem Geber der betätigten Taste an den Prozessor 7 abgegeben. Ein gerade im Prozessor 7 ablaufender Befehl wird zu Ende geführt und dann, wenn eine Unterbrechung zulässig ist, eine Interrupt-Behandlungsroutine eingeleitet. Dazu wird der System-Datenbus 2, über den Speicher und Ein-/Ausgabe-Ports an den Prozessor 7 angeschlossen sind, über den Multiplexer 6 von den Leitungen des Prozessor-Datenbus 4 abgetrennt. Dafür wird ein RE-START-Befehl 3 über dafür vorgesehene Anschlüsse vom Multiplexer 6 auf die Leitungen des Prozessor-Datenbus 4 gelegt. Der Multiplexer 6 nimmt diese Umschaltung immer dann vor, wenn über den Zustands-Decoder 8 und über die Interrupt-Quittungsleitung 9 signalisiert wird, dass der Prozessor 7 in den Zustand der Interrupt-Bearbeitung gegangen ist und wenn gleichzeitig vom Prozessor 7 angezeigt wird, dass der Prozessor-Datenbus 4 auf Eingabe in den Prozessor 7 geschaltet ist. Diese letzte Meldung wird über die Datenbus-Eingabesignalleitung 10 gegeben. Am Ausgang des UND-Gliedes 12 erscheint ein entsprechendes Aktivierungssignal für den Multiplexer 6.

Der RESTART-Befehl 3, der vom Prozessor 7 eingelesen wird, kann am Multiplexer 6 fest eingestellt sein, wobei dann nur in einer Interrupt-Ebene gearbeitet wird.

Die Tastenkennung 1 der betätigten Taste gelangt über die n Datenleitungen des Eingabe-Port 5 zum System-Datenbus 2. Damit können an einen Eingabe-Port $2^n$ funktionsgebundene Tasten angeschlossen werden. Die Information, welche Funktionstaste die Unterbrechung veranlasst hat, nämlich die Tastenkennung 1, wird vom Prozessor 7 über den Eingabe-Port 5 abgefragt.

Figur 2 zeigt, wie bereits angegeben, den Programmablauf. Ein gerade ablaufendes Programm 16 wird mittels Interrupt 13 unterbrochen. Mit dem RESTART 14 wird die Startadresse der Routine für die Interrupt-Behandlung 17 angegeben. Ein Sprung des Prozessors 7 zu dieser Adresse hat zur Folge, dass der Code der Tastenkennung 1 vom Eingabe-Port 5 eingelesen und decodiert wird (171). Nach der Decodierung wird zum gewünschten Programm-Modul verzweigt (172) und nach Abarbeitung des betreffenden Programms (173) zum ursprünglich unterbrochenen Programm zurückgekehrt (15).

Da Mikroprozessoren nur eine relativ kleine Anzahl von Interrupt-Ebenen bieten, kann nicht jeder der Funktionstasten eine Interrupt-Ebene zugewiesen werden. Es wird deshalb nur eine einzige Ebene benutzt. Die restlichen Ebenen bleiben für weitere Anwendungen frei.

**Sämtliche Ansprüche ersetzt durch den einzigen Anspruch, eingebracht während der mündlichen Verhandlung am 18.10.84.**

**Patentanspruch**

1. Tasteneingabevorrichtung für elektronische Rechner, insbesondere Mikrocomputer, zum Eingeben von Kommandos und/oder Kommandofolgen, bei welcher Tastatur den einzelnen Tasten jeweils individuelle Kommandos oder Kommandofolgen zugeordnet sind und jede Taste mit einem ihre jeweilige Tastenkennung und einem ihre Betätigung signalisierenden Geber ausgestattet ist, wobei die einzelnen die Betätigung signalisierenden Geber ständig zyklisch abgetastet werden, wobei allen Tasten zumindest eine gemeinsame Interrupt-Ebene des betreffenden Rechners zugeordnet ist, wobei die einzelnen die Betätigung einer Taste signalisierenden Geber jeweils auf einen Interrupt-Eingang (11) eines Prozessors (7) des Rechners einwirken, wobei die individuellen Tastenkennungen (1) jeweils codiert, vorzugsweise systemkompatibel codiert, über n Datenleitungen eines Eingabe-Port (5) an einen System-Datenbus (2) des Rechners geliefert werden und wobei die Tastenkennung (1) der Taste, die jeweils einen Interrupt (13) hervorruft, von dem Prozessor (7) über den Eingabe-Port (5) abgefragt wird, dadurch gekennzeichnet, dass ein Multiplexer (6) vorgesehen ist, mit dessen Hilfe ein an den Prozessor (7) angeschlossener Prozessor-Datenbus (4) fallweise von dem System-Datenbus (2) und Ausgangsleitungen des Eingabe-Port (5) auf einen RESTART-Befehl (3) übertragende Leitungen dann umschaltbar ist, wenn der Prozessor für die Interrupt-Bearbeitung bereit ist, dass der Multiplexer (6) mit einem Steuereingang an den Ausgang eines UND-Gliedes (12) angeschlossen ist und dass der Multiplexer (6) eine Umschaltung durchführt, wenn an die Eingänge des UND-Gliedes (12) ein für die Umschaltung erforderliches Signal aus einem Zustandsdecoder (8) über eine Interrupt-Quittungsleitung (9) und eine für die Umschaltung erforderliche Datenbus-Eingabesignalleitung (10) aus dem Prozessor (7) geliefert werden, dass der jeweilige RESTART-Befehl (3) in dem Multiplexer (6) erzeugt wird und dass ein einziger RESTART-Befehl (3) vorgesehen ist, so dass nur eine einzige Interrupt-Ebene anzusteuern ist, und dass dieser einzige RESTART-Befehl (3) in dem Multiplexer (6) fest eingestellt ist.

**Claim:**

1. A push-button input device for electronic computers, in particular microcomputers, for the input of commands and/or command sequences, in which keyboard the individual push-bottons are each assigned individual commands or command sequences and each push-button is equipped with a generator which signals its push-button code and with a generator which signals its actuation, where the individual generators which signal actuation are continuously scanned in cyclic fashion, where all the push-buttons are assigned at least one common interrupt plane of the relevant computer, where the individual generators which signal the actuation of a push-button each act upon an interrupt input (11) of a processor (7) of the computer, where the individual push-button codes are each supplied in coded form – preferably in a system-compatible code – via n data lines of an input port (5) to a system data bus (2) of the computer, and where the push-button code (1) of the push-button which results in an interrupt (13) is interrogated by the processor (7) via the input port (5), characterized in
– that a multiplier (6) is provided, with the aid of which a processor data bus (4), which is connected to the processor (7), can be switched over for each case in turn from the system data bus (2) and output lines of the input port (5) to lines which transmit a restart command (3), whenever the processor is ready for the interrupt processing,

– that the multiplexer (6) is connected by a control input to the output of an AND-gate (12), and
– that the multiplexer (6) effects a switch-over whenever the inputs of the AND-gate (12) are supplied with a signal, required for the switch-over, from a status decoder (8) via an interrupt acknowledgement line (9) and are supplied with a signal, required for switch-over, on the data bus input signal line (10) from the processor (7), that the relevant restart-command (3) is produced in the multiplexer (6), and
– that one single restart-command (3) is provided so that only one single interrupt plane is to be operated, and
– that this single restart-command (3) is permanently set in the multiplexer (6).

### Revendication

Dispositif d'entrée à touches pour des calculatrices électroniques, plus particulièrement pour des microordinateurs, pour l'introduction d'instructions et/ou de séries d'instructions, clavier dans lequel sont associées aux différentes touches des instructions ou séries d'instructions individuelles, chaque touche étant pourvue d'un générateur signalant l'identification de la touche concernée et un générateur signalant son actionnement, et les différents générateur qui signalant l'actionnement étant explorés en permanence de façon cyclique, alors qu'à toutes les touches est associé au moins un niveau d'interruption de la calculatrice concernée, que les différents générateurs qui signalant l'actionnement d'une touche agissent respectivement sur une entrée d'interruption (11) d'un processeur (7) de la calculatrice, que les identifications individuelles des touches (1) sont, après un codage, de préférence un codage compatible avec le système, et par l'intermédiaire de n lignes de transmission de données d'un point d'entrée (5), transmises à un bus de données (2) de la calculatrice, et que l'identification (1) de la touche, qui provoque une interruption (13) est interrogée par le processeur (7), par l'intermédiaire du point d'entrée (5), caractérisé par le fait qu'un multiplexeur (6) est prévu, à l'aide duquel un bus de données (4) du processeurs relié au processeur (7) est, le case échéant, susceptible d'être commuté du bus de données du système (2) et des lignes de départ du point d'entrée (5) sur des lignes qui transmettant une instruction de REPRISE (3), lorsque le processeur est prêt pour le traitement d'une interruption, que le multiplexeur (6) est relié par une entrée de commande à la sortie d'un circuit ET (12) et que le multiplexeur (6) réalise une commutation lorsque sont fournis aux entrée du circuit ET (12) un signal nécessaire pour la commutation, provenant d'un décodeur d'états (8) par l'intermédiaire d'une ligne d'accusé de réception d'interruption (9), et un signal sur la ligne de signaux d'entrée (10) du bus de données, nécessaire pour la commutation et provenant du processeur (7), que l'instruction REPRISE (3) concernée est produite dans le multiplexeur (6), et qu'il est prévu une seule instruction REPRISE (3), en sorte qu'un seul niveau d'interruption doit être attaqué, et que cette instruction REPRISE unique (3) est réglée à demeure dans le multiplexeur (6).

FIG 1

FIG 2